# EUROPEAN PATENT SPECIFICATION

(11) **EP 3 674 633 B1**
(45) Date of publication and mention of the grant of the patent: **06.09.2023**
(21) Application number: 19213191.0
(22) Date of filing: 03.12.2019
(51) Int. Cl.: F25D 23/02, F25D 25/02, F25D 25/04, F25D 29/00, F25D 25/00

(54) **REFRIGERATOR**
KÜHLSCHRANK
RÉFRIGÉRATEUR

(30) Priority: 07.12.2018 KR 20180157264
(43) Date of publication of application: 01.07.2020
(60) Divisional application: 23189543.4
(73) Proprietor: LG Electronics Inc., SEOUL, 07336 (KR)
(72) Inventor: HWANG, Minkyu, 08592 Seoul (KR)
(74) Representative: Vossius & Partner Patentanwälte Rechtsanwälte mbB

(56) References cited:
- EP-A2- 2 401 568
- CN-A- 106 322 899
- CN-A- 108 917 283
- CN-U- 207 113 398
- JP-A- 2017 133 818
- US-A1- 2010 236 281

## Description

### BACKGROUND

The present disclosure relates to a refrigerator.

Generally, a refrigerator is a household appliance that makes it possible to store food at low temperatures in an internal storage space that is shielded by a door. For this purpose, the refrigerator is configured to store the stored food in an optimum state by cooling the inside of the storage space via the cool air generated from the heat exchange with the refrigerant circulating in the refrigeration cycle.

Recently, refrigerators have become increasingly large and multifunctional in accordance with changes in diet and product trends. A refrigerator having various convenience devices for improving user's convenience has been introduced.

In recent years, various refrigerators have been developed to enable a user to control the operation of a refrigerator using voice. In the case of a refrigerator, there may be a problem that the door is not manually opened or the manipulator of the refrigerator is not manually available when the object is held in both hands of the user. To solve this problem, a refrigerator has been developed in which a microphone is placed in a refrigerator and a user's voice is input to control the operation thereof.

Korean Patent Application Publication No. 10-2006-0096730 discloses a refrigerator in which a basket is provided on a retractable or extendable door so as to ascend and descend, and a manipulation switch provided on the outer side of the door is used to move a movable part so that the basket may ascend and descend.

However, in the refrigerator having such a structure, there is a problem that the manipulation switch must be directly manipulated by the user for ascending and descending of the basket. Therefore, there is a problem that the ascending and descending of the basket is not possible in situations where the user is holding objects in both hands or cannot manipulate the manipulation switch in a somewhat distant position from the switch.

EP 2 401 568 A2 relates to a storage system for an appliance that includes multiple containers where any container can be selected for presentation. This document discloses the preamble of appended claim 1.

US 2010/236281 A1 relates to a refrigerator, wherein a receiving box may be automatically drawn in and out together with a door when a user operates an input device that inputs door drawing in and out instructions.

CN 108 917 283 A relates to an intelligent refrigerator control method, a system, an intelligent refrigerator, and a cloud server.

CN 106 322 899 relates to a refrigerator with a TFT display control assembly.

JP 2017-133818 A relates to a refrigerator that can enhance a degree of freedom of a position at the time of setting a microphone.

### SUMMARY

In the following, the term "disclosure" refers to the invention defined by the appended claims. A purpose of an embodiment of the present disclosure is to provide a refrigerator according to appended claim 1 in which ascending or descending of a drawer type door may be carried out by an voice input from the user.

Another purpose of an embodiment of the present disclosure is to provide a refrigerator in which retracting or extending and ascending or descending of the drawer type door may be carried out consecutively by the voice input from the user.

Another purpose of an embodiment of the present disclosure is to provide a refrigerator in which retracting or extending and ascending or descending of the drawer type door may be carried out step by step by the voice input from the user.

Another purpose of an embodiment of the present disclosure is to provide a refrigerator in which a recognition ability of a voice for ascending and descending operation of the drawer type door is guaranteed.

Another purpose of an embodiment of the present disclosure is to provide a refrigerator in which the number of components placed in the refrigerator for ascending and descending operation of the drawer type door is minimized to avoid a space loss.

Another purpose of an embodiment of the present disclosure is to provide a refrigerator in which minimization of exposure of components for manipulation externally may improve appearance of the refrigerator.

In a first aspect of the present disclosure, there is provided a refrigerator comprising: a cabinet having an upper storage chamber and a lower storage chamber defined therein; an upper door configured to open and close the upper storage chamber; a lower door positioned below the upper door and retractable into and extendable out of the lower storage chamber, the lower door including a drawer part having a storage space defined therein, and a door part configured to open and close the lower storage chamber in an extendable mode and a retractable mode of the lower door respectively; a draw-out rail provided between an inner surface of the lower storage chamber and both outer lateral faces of the lower door, the draw-out rail being configured to guide a movement of the lower door into and out of the lower storage chamber; an ascending and descending mechanism provided at the drawer part and configured to ascend and descend the storage space; a driving mechanism provided at the door part and configured to provide a driving force to the ascending and descending mechanism; a controller provided at the cabinet and configured to control the driving mechanism; a microphone module provided at the upper door and configured to receive a voice input from a user; a voice recognition module configured to allow the controller to control the driving mechanism in response to the voice input from the user, and a cap decoration provided on a top face of the upper door having a top recess defined therein to receive therein the microphone module and the voice recognition module.

In one implementation of the first aspect, the voice recognition module includes a communication unit communicating with a remote server, wherein the communication unit transmits the use voice signal input to the voice recognition module to the server and receives a processing result of the voice signal from the server.

In one implementation of the first aspect, the controller is configured to control the driving mechanism based on the processing result received from the server.

In one implementation of the first aspect, the upper door has a display indicating an operation status of the refrigerator, wherein the display is electrically connected to the voice recognition module and displays the processing result received from the server.

In one implementation of the first aspect, when the server receives a voice signal including a predefined voice or word, communication between the server and the voice recognition module is initiated.

In one implementation of the first aspect, the driving mechanism includes: a retracting and extending motor disposed at one side of the cabinet for supplying power for retracting or extending the lower door thereto; and an ascending and descending motor linked to the ascending and descending mechanism for supplying power for ascending and descending the ascending and descending mechanism thereto.

In one implementation of the first aspect, the controller is configured to activate sequentially the retracting and extending motor and the ascending and descending motor in response to the voice input from the user, such that after the lower door has been extended, the ascending and descending mechanism ascends, or such that the ascending and descending mechanism has descended and then the lower door is retracted.

In one implementation of the first aspect, the controller is configured to activate one of the retracting and extending motor and the ascending and descending motor in response to the voice input from the user.

In one implementation of the first aspect, a cover is disposed to block the open top face of the top recess, wherein a microphone-module mount on which the microphone module is mounted is formed on the cover, wherein a sound input hole is defined in the microphone-module mount.

In one implementation of the first aspect, the microphone-module mount includes: a protrusion protruding upwards from the cover; and an inclined portion extending frontwards from a front face of the protrusion, wherein the inclined portion has a bottom face inclined downwards in a front direction, wherein the voice input hole is defined in the inclined portion.

In one implementation of the first aspect, a hole guide protrudes around the voice input hole, wherein a protrusion dimension of the hole guide decreases in a downward direction, such that a bottom face of the hole guide has a slope greater than a slope of the bottom face of the inclined portion.

In one implementation of the first aspect, the microphone module includes: a microphone substrate extending along and disposed on the inclined portion, wherein a substrate hole is defined in the microphone substrate at a position corresponding to the voice input hole; a sealing member disposed on a front face of the microphone substrate to seal between the microphone substrate and the inclined portion; and a microphone element placed on a rear face of the microphone substrate to block the substrate hole, wherein the sealing member has a through-hole defined therein in communication with the sound input hole and the substrate hole.

In one implementation of the first aspect, two microphone elements are disposed on both sides of the microphone substrate respectively, wherein the sound input hole includes two sound input holes and the substrate hole includes two substrate holes, the through-hole includes two through-holes, wherein the two sound input holes, the two substrate holes, and the two through-holes are aligned linearly with the two microphone elements respectively.

In one implementation of the first aspect, a microphone-module support supporting the microphone module thereon is mounted on a bottom face of the microphone-module mount, wherein the microphone-module support includes: a mounting face portion in contact with and coupled to the protrusion; and a supporting face portion extending from a front end of the mounting face portion in the same inclined degree as the inclined portion, wherein the microphone module is mounted on the supporting face portion.

In one implementation of the first aspect, the refrigerator further comprises a speaker module received in the top recess, wherein the speaker module is connected to the voice recognition module, wherein a speaker-module receiving portion is recessed in the cover, wherein the speaker-module is received in the speaker-module receiving portion.

### BRIEF DESCRIPTION OF THE DRAWINGS

FIG. 1 is a front view of a refrigerator according to an embodiment of the present disclosure.
FIG. 2 is an enlarged view of a top of an upper door a refrigerator.
FIG. 3 is a perspective view of the upper door.
FIG. 4 is an exploded perspective view showing a top joint structure of the upper door.
FIG. 5 is an exploded perspective view showing a coupling structure of a cover module and a speaker module and a microphone module mounted on a top of the upper door.
FIG. 6 is a partial enlargement of the microphone-module mount according to the embodiment of the present disclosure.
FIG. 7 is a bottom perspective view of the microphone-module mount.
FIG. 8 is an exploded perspective view showing a mounting structure of the microphone module.
FIG. 9 is an exploded perspective view of the microphone module.
FIG. 10 is a perspective view of a microphone-module support according to an embodiment of the present disclosure.
FIG. 11 is a cross-sectional view showing a coupling structure of the microphone module and microphone-module support.
FIG. 12 is a partial enlargement of the coupling state of the microphone module and microphone-module support.
FIG. 13 is a cross-sectional view showing a mounting structure of the speaker module.
FIG. 14 is a block diagram showing the control signal flow of the refrigerator.
FIG. 15 is a perspective view of a state in which the lower door is closed in accordance with one embodiment of the present disclosure.
FIG. 16 is a perspective view of a state in which the lower door has been extended.
FIG. 17 shows an interior of the lower door of FIG. 16.
FIG. 18 is a perspective view of a state in which the lower door has been extended and the container has ascended.
FIG. 19 shows an interior of the lower door of FIG. 18.

### DESCRIPTION OF SPECIFIC EMBODIMENTS

For simplicity and clarity of illustration, elements in the figures are not necessarily drawn to scale. The same reference numbers in different figures denote the same or similar elements, and as such perform similar functionality.

Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Examples of various embodiments are illustrated and described further below. It will be understood that the description herein is not intended to limit the claims to the specific embodiments described. On the contrary, it is intended to cover alternatives, modifications, and equivalents as may be included within the scope of the present disclosure as defined by the appended claims.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "includes", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of" when preceding a list of elements may modify the entire list of elements and may not modify the individual elements of the list.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

In addition, it will also be understood that when a first element or layer is referred to as being present "on" a second element or layer, the first element may be disposed directly on the second element or may be disposed indirectly on the second element with a third element or layer being disposed between the first and second elements or layers.

It will be understood that when an element or layer is referred to as being "connected to", or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The present disclosure describes, for example, a refrigerator having an upper pivotable and a lower drawer type door for convenience of description and understanding. The present disclosure is not limited thereto. It should be noted that the present disclosure may be applied to all types of refrigerators according to appended claim 1 equipped with a retractable or extendable door as a drawer type door.

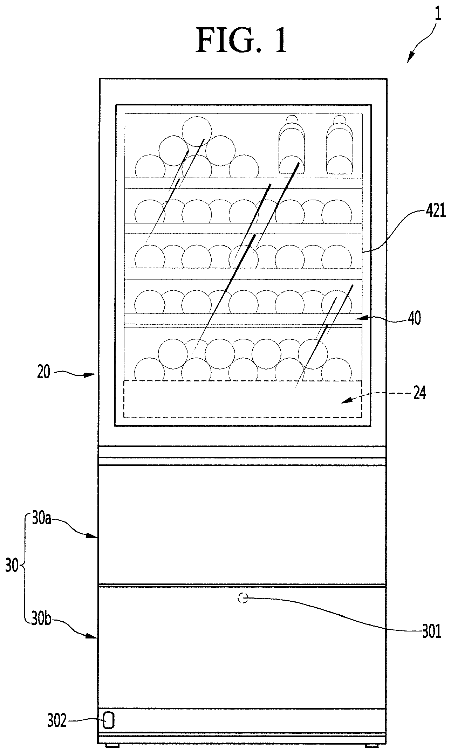

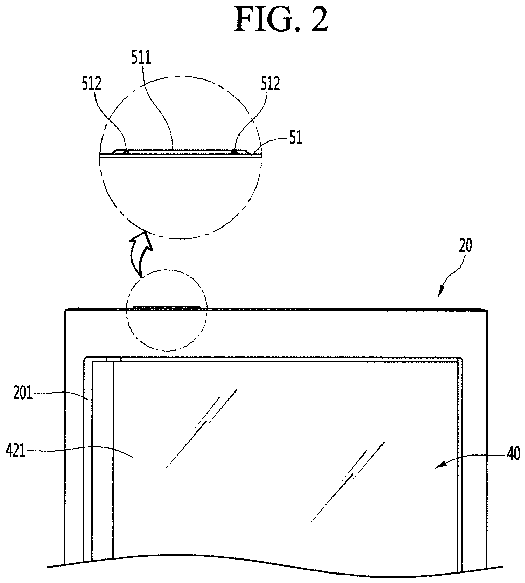

FIG. 1 is a front view of a refrigerator according to an embodiment of the present disclosure. FIG. 2 is an enlarged view of a top of an upper door of the refrigerator.

A refrigerator 1 according to an embodiment of the present disclosure includes a cabinet 10 having a storage compartment defined therein and doors 20 and 30 for opening and closing the cabinet 10.

In the cabinet 10, the storage compartment may be divided into an upper storage compartment 11 and a lower storage compartment 12. The partitioned upper and lower storage compartments may be maintained at different temperatures. Then, the door includes an upper door 20 for opening and closing the upper storage compartment and at least one lower door 30 for opening and closing the lower storage compartment.

The upper door 20 may be pivotally mounted to the cabinet 10 and may be configured to open and close the upper storage compartment 11 pivotally. Thus, the upper door 20 may be referred to as a pivotable door. Then, the lower door 30 is retractably or extendably mounted to the cabinet 10 and may be configured to open and close the lower storage compartment 12 in a retracting or extending manner. Thus, the lower door 30 may be referred to as a drawer type door or a retractable or extendable door. The lower door 30 may be composed of a plurality of sub lower doors. Then, the sub lower doors 30 may be arranged vertically. In one example, the lower door may include an upper drawer type door 30a and a lower drawer type door 30b.

The upper door 20 has an auxiliary door 40 for opening or closing a central opening 201 defined therein while pivotably mounted thereto. The auxiliary door 40 may at least partially transparent so that the interior of the refrigerator can be viewed through the auxiliary door 40. Although not shown in detail, the auxiliary door 40 may be composed of a plurality of glass panels be thermally insulated from surroundings. A transparent display may be provided in the auxiliary door 40 to display a screen. Then, the manipulation of the user may allow the auxiliary door 40 to be selectively transparent or opaque. Thus, the interior of the upper storage compartment 11 may be selectively visible or invisible to the user.

A front face of the auxiliary door 40 may be formed by the front panel 421. The front panel 421 may define the majority of the area of the front face of the auxiliary door 40 so that most of the interior of the upper storage compartment 11 may be viewed substantially through the auxiliary door 40.

A display 24 may be disposed below the opening 201. Then, the display 24 is configured to be visible from the outside through the auxiliary door 40. On the display 24, the operation state or the setting state of the refrigerator 1 may be output. In particular, the display 24 may output the operation setting status of the lower door 30.

For example, the ascended or descended state of the lower door 30 or the setting state for ascending and descending may be displayed on the display 24. That is, when the lower door 30 is in a state ready for retracting or extending and ascending or descending operations in response to the user's voice input, the display 24 may output that the lower door 30 is in the ready state. Then, when the lower door 30 is in a state ready for retracting or extending and ascending or descending operations in response to direct manipulation of the manipulation part 301 or 302 by the user, the display 24 may output that the lower door 30 is in the ready state. Further, when the lower door 30 is in a state ready only for the retracting or extending operation or the ascending or descending operation in response to the user's voice input, the display 24 may output that the lower door 30 is in the ready state.

Then, the display 24 may output that the lower door 30 has been retracted or extended or may output that the lower door 30 is being retracted or extended. Further, the display 24 may output that the lower door 30 has ascended and descended or may output that the lower door 30 is being ascended and descended.

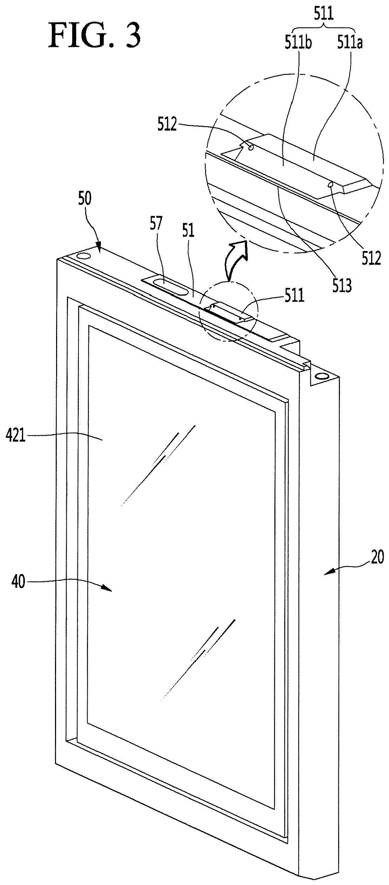

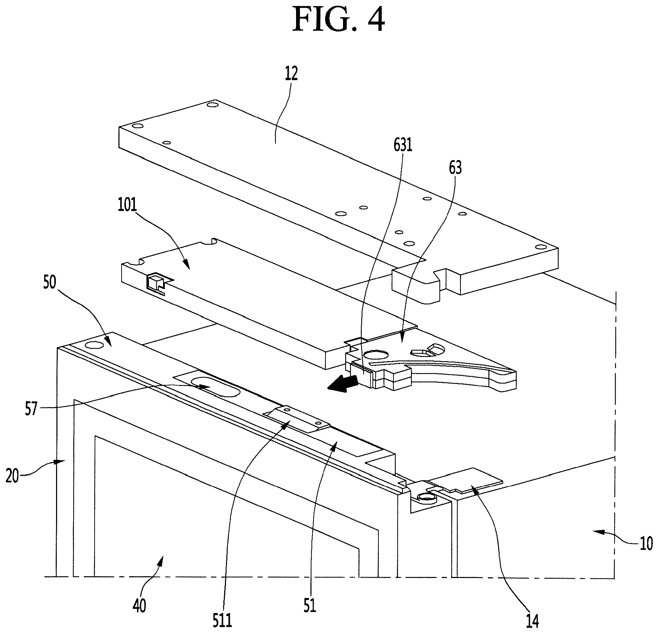

FIG. 2 is an enlarged view of a top of the upper door of the refrigerator. FIG. 3 is a perspective view of the upper door. FIG. 4 is an exploded perspective view showing a top joint structure of the upper door.

A controller 101 is provided on the top face of the door cabinet 10. A door opening mechanism 63 may be provided adjacent to the controller 101. The door opening mechanism 63 is configured such that a push rod 631 may be retracted or extended. When the push rod 631 is extended, the push rod may push a rear of the upper door 20 to be open. Then, then the push rod 631 is retracted, the upper door 20 is closed by its own weight.

The controller 101 and the door opening mechanism 63 are mounted on the top face of the cabinet 10. The top portion of the cabinet 10 may include a main casing 12 which accommodates both the controller 101 and the door opening mechanism 63, as well as a hinge mechanism 14 for opening and closing the upper door 20.

The controller 101 may be connected to the door opening mechanism 63. The door opening mechanism 63 may be configured to work in response to input of the user's voice command. That is, without the manipulation of a separate button, the door opening mechanism 63 may be activated by the user's voice.

In one example, in another embodiment of the present disclosure, the upper door 20 has a relatively thin structure. Thus, the relatively large door opening mechanism 63 is unable to be positioned in the cap decoration 50 but is mounted on the cabinet 10 to pivot the upper door 20 in a pushing manner.

The door opening mechanism 63 is disposed on a lateral side of the cabinet 10 so that the upper door 20 may be slim in thickness. Even with a slim structure of the upper door 20, an insulation loss of the upper door 20 can be minimized.

The upper door 20 may be formed by combining an out plate 21 forming an outer appearance including a front face and a door liner (not shown) forming a back face thereof. The space between the out plate 21 and the door liner may be filled with an insulation material. Then, a cap decoration 50 is provided on the top face of the upper door 20.

A microphone-module mount 511 on which a microphone module 53 for receiving a user's voice is mounted may protrude from the top face of the upper door 20. The microphone module 53 is accommodated in the interior space of the cap decoration 50. Then, the inner space of the cap decoration 50 may be shielded with a cover 51. The microphone-module mount 511 may be formed on the cover 51.

Further, the microphone-module mount 511 may be disposed in an area between the left and right ends of the upper door 20. Thus, when a user speaks in at center of the refrigerator 1, the user voice can be recognized more effectively.

The microphone-module mount 511 may be virtually invisible when viewed from the front due to the characteristics in terms of the shape. Since the height of the refrigerator is usually larger than the user's height, the microphone-module mount 511 will not be visible to the user in a normal use environment.

Then, the microphone-module mount 511 may include a protrusion 511a, an inclined portion 511b, and a depression 513. A sound input hole 512 may be defined in the inclined portion 511b. Therefore, the microphone-module mount 511 and the sound input hole 512 defined in the microphone-module mount 511 may be invisible even when the user is in a position away from the refrigerator 1.

Thus, the microphone-module mount 511 may have a position and structure that ensures a high voice recognition ability while minimizing exposure thereof to the outside. Hereinafter, the structure of the microphone-module mount 511 and the microphone module 53 will be described in more detail.

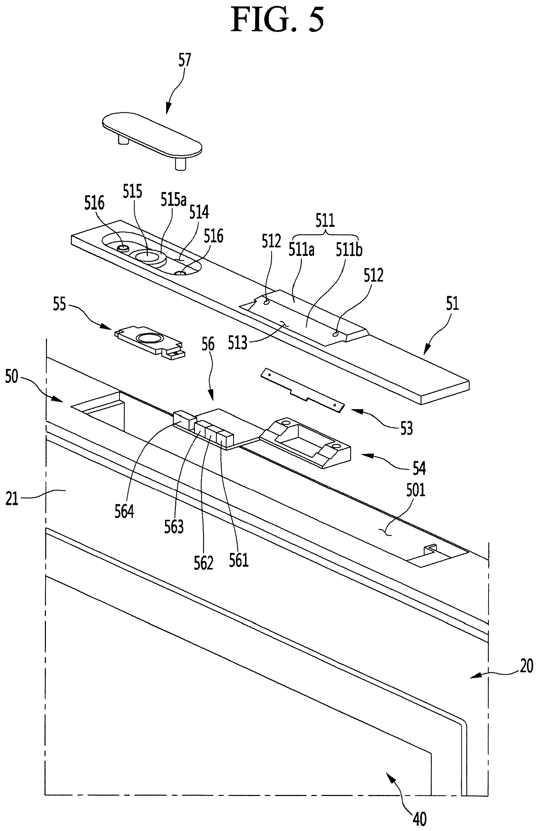

FIG. 5 is an exploded perspective view showing a coupling structure of a cover module and a speaker module and a microphone module mounted on a top of the upper door.

The cap decoration 50 is formed on the top face of the door 20. The cap decoration 50 is combined with the door liner and the outer plate 21 to form the top face of the door 20. The interior space of the door 20 defined by the outer plate 21 and the door liner and the cap decoration 50 may be filled with an insulation material.

The cap decoration 50 has a top recess 501 downwardly extending. The top recess 501 may be defined except for the periphery of the cap decoration 50.

The microphone module 53 and a voice recognition module 56 are accommodated inside the top recess 501. 2. The speaker module 55 may also be accommodated inside the top recess 501. Then, a cover 51 for shielding the opened top face of the top recess 501 may be provided.

The microphone module 53 is configured for receiving voice of a user for operation control of the refrigerator 1 and may be mounted on the microphone-module mount 511 formed on the cover 51. The microphone module 53 may be in close contact with the bottom face of the cover 51 and may be supported by a microphone-module support 54. The microphone-module mount 511 may further have a sound input hole 512 defined therein. Through the sound input hole 512, the user's voice may be input into the microphone module 53 mounted within the microphone-module mount 511.

The speaker module 55 is configured for outputting sound, and outputs information such as operation status information of the refrigerator 1 or user's request information. The speaker module 55 may be mounted on a bottom face of the speaker-module mount 514 formed on the cover 51. Then, the speaker module 55 may be fixedly mounted on the cover 51.

The voice recognition module 56 may be coupled to the microphone module 53 and the speaker module 55. The voice recognition module 56 may recognize a voice upon receiving a voice signal input from the microphone module 53. Accordingly, the voice recognition module 56 may be referred to as a voice recognition PCB (printed circuit board).

The voice recognition module 56 may convert the voice signal input from the microphone module 53 to the electrical signal and transmit the electrical signal to a remote server. Thus, the voice recognition module 56 may be formed with a minimum size required for the signal process so as to be received within a very narrow space of the upper door 20. Thus, a space required for placing the voice recognition module 56 in the upper door 20 may be minimized. That is, this configuration of the microphone module 53 may allow the loss of the insulation space of the upper door 20 to be minimized. Thus, a size of the auxiliary door 40 may be made as large as possible to enable the interior space of the refrigerator to be more visible.

In one example, the voice recognition module 56 may be coupled to the speaker module 55 and may process the voice signal and then send the processed signal back to the speaker module 55.

The voice recognition module 56 may be fixedly mounted to the inner bottom face defining the top recess 501. Then, the voice recognition module 56 may include a plurality of connectors 561, 562, 563 and 564. In detail, the connectors 561, 562, 563, and 564 may include a first connector 562 and a second connector 563 connected to a pair of the microphone modules 53 respectively, a third connector 561 connected to the speaker module 55, and a fourth connector 564 supplied with power. Thus, the speaker module 55 or the microphone module 53 may be simply separated from the upper door and thus may be maintained or replaced as needed. Thus, the user may selectively use the microphone module 53 and the speaker module 55 according to the model specification of the refrigerator 1.

The cover 51 may be formed in a plate shape corresponding to a shape of the top recess 501 and may be mounted to shield the top recess 501. When the cover 51 is mounted on the cap decoration 50, the cover may define the top face of the upper door 20. Thus, the microphone module 53 and the speaker module 55 may be fixedly mounted to the cover. That is, the microphone module 53 and the speaker module 55 may be mounted on the upper door 20, and may be mounted on the cover 51 and may be suspended the inside of the top recess 501.

In particular, the microphone module 53 remains as depending from the bottom face of the cover 51. Thus, the noise introduced into the microphone module 53 may be minimized. For example, in the refrigerator 1, due to the nature of the operation thereof, noises or vibrations of the mechanisms such as the compressor 12 constituting the refrigeration cycle during the operation of the refrigeration cycle are continuously generated. However, in the present example, this vibration or noise may be prevented from being transmitted along the door 20 to the microphone module 53.

Therefore, the microphone module 53 may be installed in the upper door 20 not to be exposed to the outside, and may be spaced from an inner portion of the upper door 20, so that the noise caused by the operation of the refrigerator 1 is minimized. This may improve voice recognition ability.

In one example, the cap decoration 50 may be covered with the cover 51. The cover 51 may shield the top recess 501. The microphone module 53 and the speaker module 55 may be fixedly mounted to the cover 51. To this end, the microphone-module mount 511 and the speaker-module mount 514 may be formed on the cover 51.

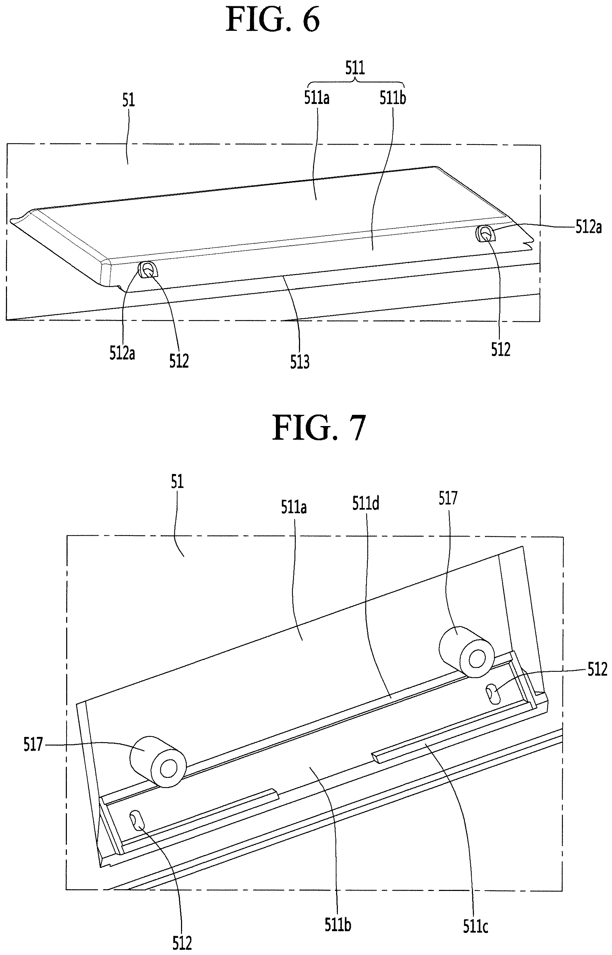

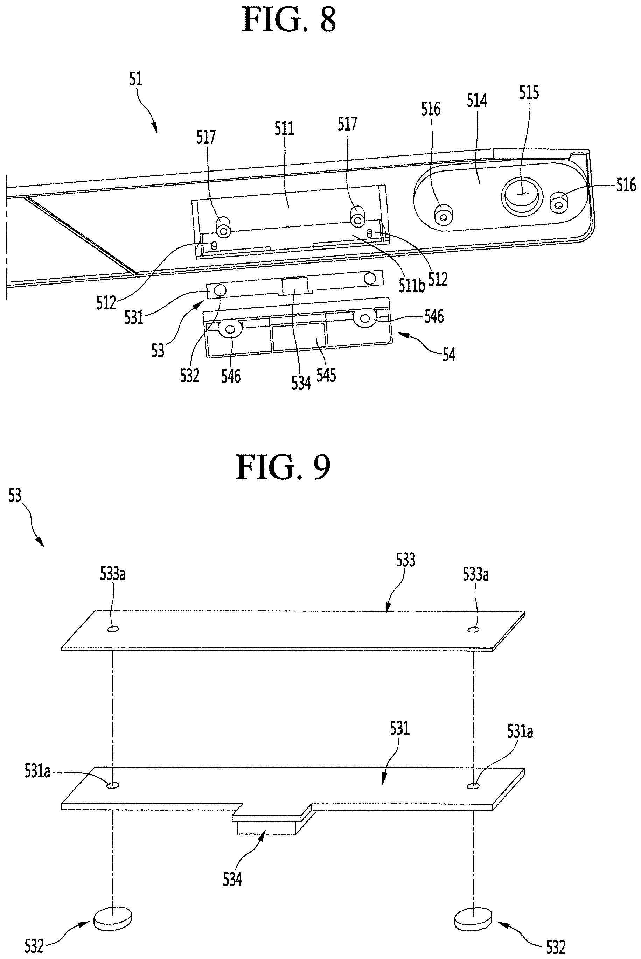

FIG. 6 is a partial enlargement of the microphone-module mount according to the embodiment of the present disclosure. FIG. 7 is a bottom perspective view of the microphone-module mount. FIG. 8 is an exploded perspective view showing a mounting structure of the microphone module.

As shown, the microphone-module mount 511 may be formed on the door cover 51. The microphone-module mount 511 may include a protrusion 511a protruding upward from the door cover 51, an inclined portion 511b formed at the front end of the protrusion 511a, and a depression 513 formed at an end of the inclined portion 511b.

The protrusion 511a may protrude to have a top face in parallel with the top face of the door cover 51 and have the highest level of the microphone-module mount 511. A microphone-module mounting boss 517 may be formed underneath the protrusion 511a. The microphone-module mounting boss 517 may be formed at each of left and right sides and may be inserted into a through-hole 546 of the microphone-module support 54. A screw S may be fastened to the microphone-module mounting boss 517 in the through hole 546 so that the microphone-module support 54 may be fixedly mounted to the bottom face of the protrusion 511a.

The protrusion height of the protrusion 511a may be sized such that a proper size of the voice input hole 512 may be defined in the inclined portion 51 1b. The protrusion height of the protrusion 511a may be sized such that then viewed from the front, the microphone-module mount 511 is invisible. For example, the height of the protrusion 511a may be set to have a height of 2 mm to 3 mm.

The inclined portion 511b may be formed at the front end of the microphone-module mount 511 and have a top face inclined downwardly as it extends in a front direction. The inclined portion 511b may have a top face of a slope of 30 to 50 degrees.

The inclined portion 511b may be formed to have a predetermined width and may have a corresponding size and shape so that the microphone module 53 may be in close contact with the bottom surface of the inclined portion 511b. A front rib 511c and a rear rib 511d for fixing the microphone module 53 to the inclined portion may protrude downwards from the bottom surface of the inclined portion 511b. The front rib 511c and rear rib 511d may extend laterally along the front end and rear end of the bottom face of the inclined portion 511b, respectively. Thus, the microphone module 53 may be fitted into between the front rib 511c and the rear rib 511d.

The microphone module 53 may be mounted at the correct position between the front rib 511c and the rear rib 511d. The voice input hole 512 formed in the inclined portion 511b may be aligned with a microphone element 532 of the microphone module 53.

The voice input hole 512 is defined in the inclined portion 511b. The voice input hole 512 may be defined at a position corresponding to a center of the microphone element 532. Thus, the user's voice may be effectively input through the voice input hole 512 to the microphone element 532. For this purpose, the sound input hole 512 is disposed at a single extension line between the through-hole 533a of the sealing member 533 and a substrate hole 531a formed in a microphone substrate 531, so that the voice of the user can be effectively transmitted to the microphone element 532.

The voice input hole 512 may be defined in left and right sides of the inclined portion 511b. That is, each of the voice input hole 512 and the corresponding microphone element 532 may be provided in a paired manner. Thus, a voice having passed through the pair of voice input holes 512 may be input to the pair of the microphone elements 532.

Each of a spacing between the pair of the voice input holes 512 and a spacing between the pair of the microphone elements 532 may preferably be approximately 5 mm to 10 mm when considering a typical location of the user. This spacing may allow more effectively analyzing and processing the voice input to the microphone element 532, thereby to improve the voice recognition performance.

A hole guide 512a may be formed around the voice input hole 512. The hole guide 512a may be constructed to protrude along the periphery of the voice input hole 512, and may be formed such that a protruding height thereof decreases as it goes downwardly. Accordingly, when the dust or foreign matter falls from above, the hole guide 512a prevents dust or foreign matter from being directly introduced into the voice input hole 512, so that the dust or foreign matter may flow down and may be guided to the depression 513.

Further, the hole guide 512a is formed on the inclined portion 511b. However, a top face of the hole guide 512a has a larger slope than the top face of the inclined portion 511b so that the voice from the user in front thereof may be delivered more effectively towards the voice input hole 512.

Further, the voice input hole 512 is facing forwards. In this connection, the hole guide 512a may be formed around the voice input hole 512 to prevent sound output from the speaker module 55 from re-entering the microphone element 532. Further, preferably, the speaker-module receiving portion 514 may be spaced from the microphone-module mount 511 or the voice input hole 512 by at least 80 mm to 120 mm.

In one example, the depression 513 may be defined in front of the inclined portion 511b. The depression 513 may be recessed downward from the end of the inclined portion 511b so that dust or foreign matter falling from above is gathered therein. Therefore, even when dust or foreign matter falls from above and accumulates on the door cover 51, the voice input hole 512 cannot be easily clogged by the dust.

That is, the dust or foreign matter flowing along the inclined portion 511b is accommodated in the depression 513 in front of the inclined portion 511b. Thus, the voice input hole 512 may not be clogged until the depression 513 is completely filled with the dust or debris which then overflows out of the depression 513, such that the voice recognition performance from the user may be maintained reliably.

In one example, the door cover 51 may have a speaker-module receiving portion 514 formed therein, on which the speaker module 55 is mounted. The speaker-module receiving portion 514 may be defined to be depressed downwardly in one area of the door cover 5. The speaker module 55 may be mounted on the bottom face of the speaker-module receiving portion 514.

A sound output hole 515 is defined in the center of the speaker-module receiving portion 514. An edge protrusion 515a may be formed around the sound output hole 515. The edge protrusion 515a may have a protruding height so as not to touch the speaker-module cover 57. The edge protrusion 515a prevents dust or foreign matter introduced into the speaker-module receiving portion 514 from entering the speaker module 55.

In one example, a sound output unit 550 of the speaker module 55 is disposed in an inner space defined by the edge protrusion 515a, that is, at a position corresponding to the sound output hole 515. Accordingly, the sound output from the sound output unit 550 can be output to the outside through the sound output hole 515 without leaking into the door 20.

Further, the speaker-module receiving portion 514 may have a pair of speaker-module mounting female bosses 516. The speaker-module mounting female boss 516 may be formed on each of both sides around the sound output hole 515. The speaker-module mounting male bosses 572 extend downward from the cover 57 and extends to a speaker-module wing 552 at each of both sides.

Further, the speaker-module receiving portion 514 may blocked by the speaker-module cover 57. The speaker-module cover 57 may include a plate portion 571 and speaker-module mounting male bosses 572. The plate portion 571 is formed in a plate shape. The plate portion 571 may have a shape corresponding to that of the speaker-module receiving portion 514 and may have a slightly smaller size than that of the speaker-module receiving portion 514. Thus, when the speaker-module cover 57 is mounted on the speaker-module receiving portion 514, a perimeter of the speaker-module receiving portion 514 and a perimeter of the speaker-module cover 57 are spaced apart from each other. Thus, the sound output from the speaker module 55 may leak out through the spacing therebetween.

The speaker-module mounting male boss 572 may extend downward from the bottom face of the speaker-module cover 57. The speaker-module mounting male boss 572 may extend through the speaker-module mounting female boss 516 to the speaker-module wing 552. A screw S may pass through the speaker-module wing 552 and then may be fastened to the speaker-module mounting male boss 572 so that the speaker-module cover 57 and the speaker module 55 are fixedly mounted on the door cover 51.

FIG. 9 is an exploded perspective view of the microphone module.

Referring to the microphone module 53 based on the drawing, the microphone module 53 may include a microphone substrate 531, a microphone element 532, and a sealing member 533. The microphone module 53 includes at least one microphone element 532 and may be called a microphone.

Specifically, the microphone substrate 531 is configured for allowing the microphone elements 532 to be mounted thereon and supported thereon to be spaced from each other by a predetermined spaced distance. Further, in both sides of the microphone substrate 531, substrate holes 531a penetrating the microphone substrate 531 may be formed therein. The substrate holes 531a may be formed at positions corresponding to the microphone elements 532. Thus, the voice of the user may be transmitted to the microphone element 532. The microphone substrate 531 may be elongated in the length direction so as to be mountable to the inclined portion 511b of the microphone-module mount 511.

A microphone connector 534 is formed on the center of the bottom face of the microphone substrate 531. The microphone connector 534 may protrude downwards (that is, in a direction away from the cap decoration) and be inserted into a connector hole 545 defined in the microphone-module support 54. Thus, the first and second connectors 563 of the voice recognition module 56 and the microphone connector 534 may be connected to each other by a harness having at both ends connected to the connectors without interference from the microphone-module support 54.

The microphone element 532 may receive voice input and may be mounted on each of both sides of the top face of the microphone substrate 531. The microphone element 532 may be located at a position corresponding to the voice input hole 512 when the microphone module 53 is mounted on the mount 511, so that the user's voice may be input to the element 532. The microphone element 532 may employ various elements having structures capable of receiving voice input from the user. In one example, the microphone element 532 may be a variety of devices that may receive voice input. Therefore, the microphone element 532 may be referred to as a microphone or microphone device.

The microphone element 532 may be positioned on the bottom face of the microphone substrate 531 and may be formed at a position corresponding to the substrate hole 531a of the microphone substrate 531 and the through-hole 533a of the sealing member 533. Thus, incoming voice from the sound input hole 512 may in turn pass through the through-hole 533a and then the substrate hole 531a and then may be introduced into the microphone element 532.

Then, the microphone element 532 and the microphone connector 534 may all be provided on the bottom face of the microphone substrate 531. Therefore, the top face of the microphone substrate 531 may be formed in a planar shape and may be in close contact with the bottom face of the cover 51, that is, the bottom face of the microphone-module mount 511.

In one example, the sealing member 533 is disposed on each of both sides of the top face of the microphone substrate 531 and surrounds the microphone element 532. The sealing member 533 may be disposed at each of both ends of the microphone substrate 531 and may be disposed between and in tight contact with the microphone substrate 531 and the inclined portion 511b of the microphone-module mount 511.

The sealing member 533 may be made of a material having elasticity and may be adhered to the top face of the microphone substrate 531 and the bottom face of the inclined portion 511b. The sealing member 533 may completely hermetically seale between the top face of the microphone substrate 531 and the bottom face of the inclined portion 511b so that external voice is directed toward the microphone element 532 without leakage of the voice. The sealing member may prevent internal noise in the upper door 20 from entering the microphone element. As the sealing member 533, an adhesive tape or a double-sided tape may be used. When the sealing member 533 is formed of an adhesive material, the microphone module 53 may be attached and fixed substantially to the microphone-module mount 511. In this connection, the sealing member 533 may be referred to as an adhesive member or a fixing member.

Through-holes 533a are formed on both sides of the sealing member 533. The through-holes 533a may be disposed at the single extension line from the microphone element 532 and the substrate hole 531a. Thus, the sealing member 533 may act as a passage through which the voice is transmitted to the microphone element 532, as well as may fix the microphone module 53.

Further, the sealing member 533 may effectively buffer shock or vibration generated when the door 20 is opened or closed due to the nature of the use environment of the door 20. Further, the sealing member 533 may allow the mounting position of the microphone module 53 to be maintained and the element 532 to be sealed so that excellent voice recognition performance can be maintained. Further, vibrations and shocks from the cabinet 10 during the operation of the refrigerator 1 may also be mitigated by the sealing member 533.

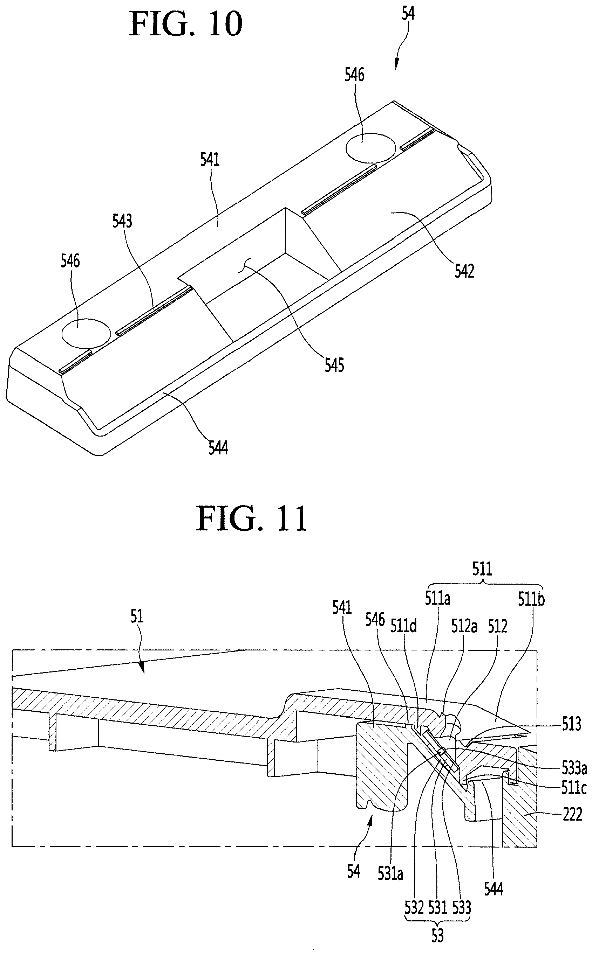

FIG. 10 is a perspective view of a microphone-module support according to an embodiment of the present disclosure.

As shown in the figure, the microphone-module support 54 is mounted on the door cover 51 so that the microphone module 53 can be tightly fixed to the inclined portion 511b of the door cover 51. The top face of the microphone-module support 54 may include a mounting face 541 and a supporting face 542.

The mounting face 541 is configured for mounting the microphone-module support 54 on the cover 51. The face 541 may be parallel to the bottom face of the door cover 51. More specifically, the face 541 may be parallel to the bottom face of the protrusion 511a. A pair of supporter through-holes 546 may be respectively defined in both sides of the mounting face 541 to penetrate the microphone-module support 54 in the up-and-down direction. The screw S may upwardly pass through the supporter through-hole 546 and be fastened to the microphone-module mounting male boss 517.

The supporting face 542 is formed in front of the mounting face 541 and is inclined downwardly as it goes in the front direction. The supporting face 542 may be sized such that the microphone module 53 is mounted thereon. The face 542 may be constructed to have a slope corresponding to the inclined portion 511b of the microphone-module mount 511. Thus, the microphone module 53 may be disposed between the inclined portion 511b and the supporting face 542.

Moreover, from a rear end of the supporting face 542, an upper rib 543 may protrude to be in contact with the rear rib 511d. A lower rib 544 to be in contact with the front rib 511c may protrude from the front end of the supporting face 542.

The lower rib 544 has a predetermined height. The lower rib 544 may define an edge protrusion extending upward along a front edge and a portion of a side edge of the microphone-module support 54. Accordingly, when the microphone-module support 54 is mounted on the cover 11, the front rib 511c and the rear rib 511d may be positioned between the upper rib 543 and the lower rib 544, while the depression 513 of the microphone-module mount 511 may be inserted into a space between the supporting face 542 and the lower rib 544.

In accordance with this structure, the microphone-module support 54 can be mounted in the correct position. The guide structure of the ribs 511c, 511d, 543, and 544 guides the microphone-module support 54 to be mounted at an accurate position where optimal voice recognition performance can be maintained.

In one example, a connector hole 545 may be defined in the center of the microphone-module support 54. Thus, while the microphone module 53 is mounted on the supporting face 542, the microphone connector 534 may be exposed downwardly through the connector hole 545. Accordingly, the microphone module 53 may be connected to the voice recognition module 56 while the microphone module 53 is fixedly mounted on the door cover 51.

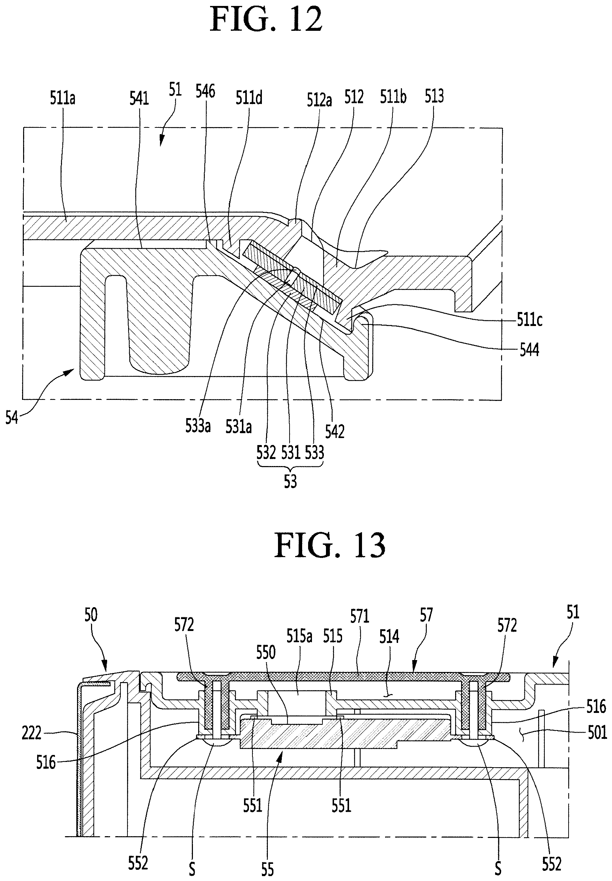

FIG. 11 is a cross-sectional view showing a coupling structure of the microphone module and microphone-module support. FIG. 12 is a partial enlargement of the coupling state of the microphone module and microphone-module support.

Referring to the mounting structure of the microphone module 53 in detail based on the drawings, the microphone module 53 is mounted on the supporting face 542 of the microphone-module support 54. In this connection, the microphone connector 534 is located inside the connector hole 545.

The microphone-module support 54 with the microphone module 53 mounted thereon is placed on the microphone-module mount 511. In this connection, the mounting face 541 of the microphone-module support 54 is mounted on the bottom face of the protrusion 511a of the microphone-module mount 511. Then, the screw S below the microphone-module support 54 passes through the supporter through-hole 546 and then is fastened to the microphone-module mounting male boss 517.

The upper rib 543 and the lower rib 544 may be coupled to the front rib 511c and the rear rib 511d respectively and may contact the outer faces of the front rib 511c and the rear rib 511d respectively while the screw S has been fastened to the boss 517. Thus, the microphone-module support 54 may be positioned in the correct position. As a result, the microphone element 532 of the microphone module 53 and the voice input hole 512 can be aligned with each other.

Further, the microphone module 53 is located in the space between the front rib 511c and the rear rib 511d. The sealing member 533 of the microphone module 53 seals between the microphone substrate 531 and the bottom face of the inclined portion 511b.

Particularly, when the screw S for mounting the microphone-module support 54 to the cover 51 is completely tightened, the microphone-module support 54 presses the microphone module 53 against the bottom face of the inclined portion 51 1b. Thus, the sealing member 533 may be compressed to seal the space between the microphone substrate 531 and the back surface of the inclined portion 511b.

Thus, the voice entering the voice input hole 512 may pass through the through-hole 533a and substrate hole 531a and then may be completely transmitted to the microphone element 532 without leakage. In addition, unwanted noise is prevented from entering the microphone element 532.

In one example, the voice input hole 512 may be defined so that its diameter widens in a downward direction, that is, in a direction approaching the microphone element 532. Therefore, the voice introduced into the voice input hole 512 may be effectively transmitted to the microphone element 532 and minimize the generation of noise.

Hereinafter, the mounting structure of the speaker module 55 will be described in more detail with reference to the drawings.

FIG. 13 is a cross section showing the mounting structure of the speaker module.

The speaker module, as shown, may be disposed on the bottom face of the speaker-module receiving portion 514. In this connection, a sound output unit 550 for outputting voice is present on the speaker module 55 to face the sound output hole 515. An output unit guide 551 may extend around the sound output unit 550. The output unit guide 551 may be constructed to abut the outer edge of the edge protrusion 515a formed on the speaker-module receiving portion 514. Thus, the speaker module 55 may be mounted in the correct position and the sound output from the sound output unit 550 may be transmitted externally through the sound output hole 515.

The speaker-module cover 57 covers the speaker-module receiving portion 514. The speaker-module mounting male boss 572 penetrates the speaker-module mounting female boss 516. The screw upwardly passing through the speaker-module wing 552 is coupled to the speaker-module mounting male boss 572 to couple the speaker-module cover 57 and the speaker module 55 together.

The speaker-module cover 57 may be flush with the top faces of the door cover 51 and the cap decoration 50 when the cover 57 is mounted on the speaker-module receiving portion 514. Then, the sound output to the speaker module 55 passes through the sound output hole 515 and then leaks between the periphery of the speaker-module cover 57 and the periphery of the speaker-module receiving portion 514.

Hereinafter, the operation of the refrigerator 1 having the above structure will be described.

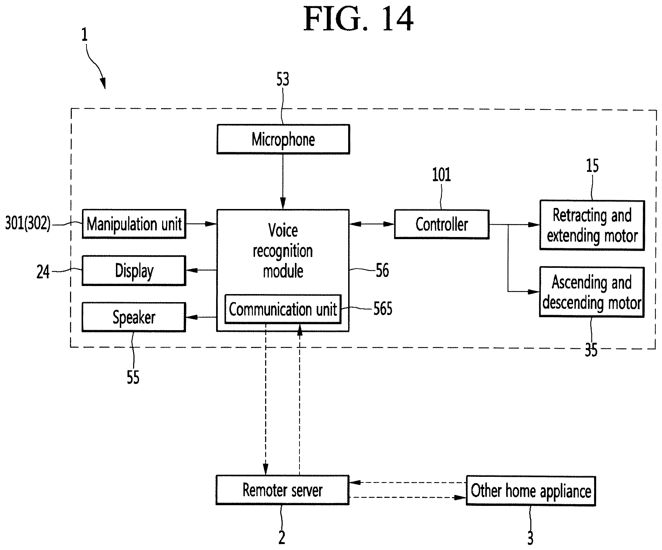

FIG. 14 is a block diagram showing the control signal flow of the refrigerator.

As shown in the figure, the refrigerator 1 is operated under the control of the controller 101 to operate the refrigeration cycle including the compressor 12 to cool the inside of the refrigerator. The controller 101 may be configured to control the overall electrical components inside the refrigerator and to receive signals from various sensors. The controller 101 controls the overall operation of the refrigerator and may be called a main PCB or controller.

To operate the refrigerator 1, the user operates the refrigerator 1 by directly manipulating the display 24 of the refrigerator 1 or the manipulation unit 301 or 302 provided on the door or cabinet. Further, the user inputs manipulation inputs to manipulate the temperature of the refrigerator 1, or to manipulate the performance of certain functions.

In one example, the user may control the operation of the refrigerator 1 by allowing the microphone module to recognize the user's voice at a remote location where the user is far away from the refrigerator or when the user cannot use both the hands.

For example, when a user speaks a set trigger voice in front of the refrigerator 1, the voice recognition mode is activated by the microphone module 53 and the voice recognition module 56. The user then enters the voice command for operation of the refrigerator 1.

In one example, the voice recognition module 56 includes a communication unit 565. Therefore, the voice recognition module 56 may communicate with the server 2 using the communication unit 565 and may process the voice signal inputted from the microphone module 53 and transmit the processed signal to the server 2.

The server 2 receives the voice signal from the microphone module 53, analyzes the voice signal, and determines a voice command accordingly. Then, the server may process or analyze the received voice signal in a natural language form and then converts the same into text data, or the like. Then, the server may analyze the text data to determine the voice command, or may pass the analyzed data or text data to the refrigerator 1 or other home appliance 3 using the communication unit.

The server may be composed of at least one of an Automatic Speech Recognition (ASR) server, a Natural Language Processing server (NLP server), or a Text to Speech (TTS) server. The Automatic Speech Recognition (ASR) server, Natural Language Processing server (NLP server), and Text to Speech (TTS) server may perform a complex operation in conjunction with each other.

Therefore, the process of analyzing and processing the voice signal received from the refrigerator 1 may be performed on the server 2. The processed data by the server 2 may be passed back to the voice recognition module 56 using the communication unit 565. Using this structure, the number of the components of the voice recognition module 56 can be minimized. In particular, the server 2, which is relatively free of volume and performance constraints may have excellent performance, and thus may perform analysis of voice signals, conversion of voice signals, and other additional tasks associated with the input voice signal.

For example, the server 2 may search information based on the received voice signal or compare the operation information of the refrigerator 1 with stored data to check the status thereof. Then, the information acquired using the server 2 may be passed back to the refrigerator 1 using the communication unit 565, which in turn may be output through the speaker module 55 or on the display 24. Further, the operation control of the refrigerator 1 may be carried out depending on the information delivered from the server 2.

The communication of the refrigerator 1 with the server 2 enables indirect communication between the server 1 and other home appliances 3 via the refrigerator 1. Thus, the server may execute operation control or obtain status information for other home appliances 3.

The voice recognition module 56 is coupled to the controller 101. Therefore, the user's voice input may be used to control the operations of electrical components connected to the controller 101.

For example, the user may use the voice to input the retracting or extending and ascending or descending operations of the lower door 30. In other words, the user may control the driving mechanism for operation of the lower door 30 only by using the voice in the state where the hands of the user are not available.

The driving mechanism may include a retracting and extending motor 15 for retracting or extending the lower door 30 and an ascending and descending motor 35 for ascending and descending of the lower door 30. The user controls the operation of the driving mechanism using the user's voice.

Hereinafter, a structure and a control method for ascending and descending the lower door using a voice of a user will be described in detail with reference to the drawings.

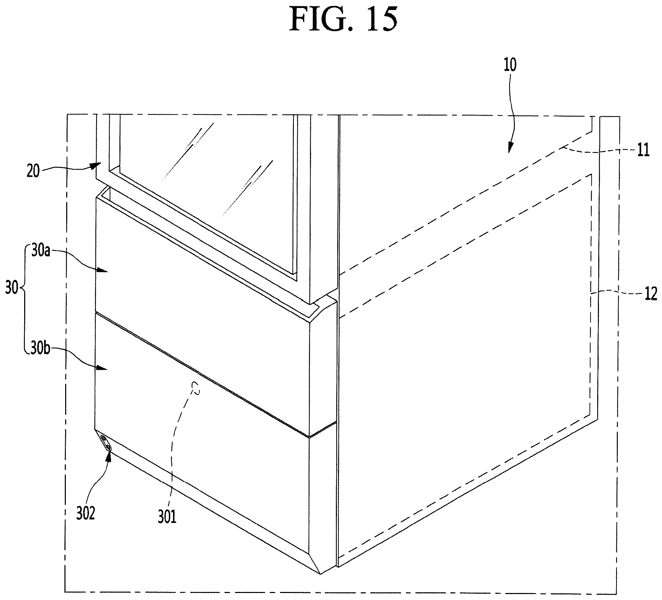

FIG. 15 is a perspective view of a state in which the lower door is closed in accordance with one embodiment of the present disclosure.

In the refrigerator 1, both the upper door 20 and the lower door 30 remain closed when the food is stored therein. In this state, the user may manipulate, that is, may retract or extend or ascend and descend the lower door 30 and then may store or withdraw the food therein or therefrom.

The user may manipulate manipulation units 301 and 302 provided on the front face or bottom face of the lower door 30 for retracting or extending the lower door 30. The manipulation units 301 and 302 may include a switch 301 on which the user may touch or press, and may be provided on the front face of the lower door 30, and a proximity sensor 302 as provided at the bottom of the lower door 30.

Further, when the user is holding an object in his hands or is unable to manipulate the manipulation unit 301 or 302 directly at a position remote therefrom, the user may use voice to input the retracting or extending or ascending or descending operation of the lower door 30.

Hereinafter, an example in which a lower drawer type door 30b among the drawer type doors 30 arranged vertically retracts or extends or ascends or descends may be described. However, the upper drawer type door 30a retracts or extends or ascends or descends in the same manner or using the same structure as those of the lower drawer type door 30b.

The following describes an example of controlling the operation of the lower door using the voice of the user.

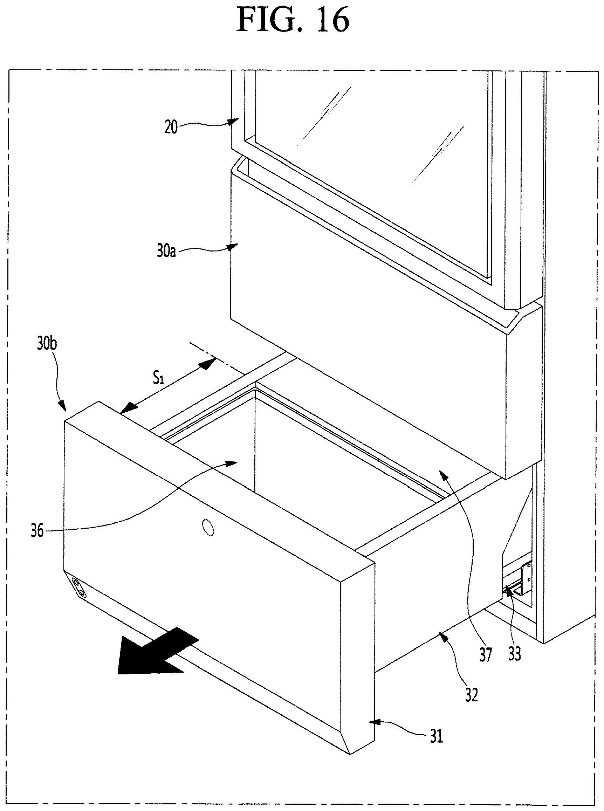

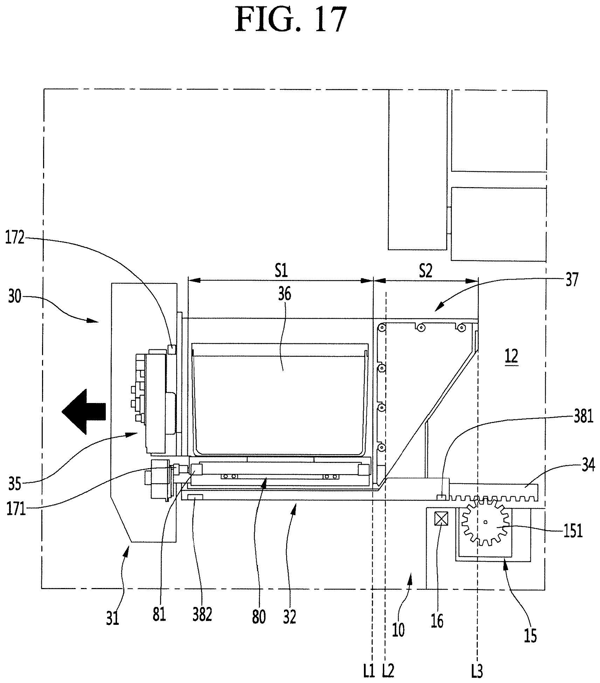

FIG. 16 is a perspective view of a state in which the lower door has been extended. FIG. 17 shows an interior of the lower door of FIG. 16.

As shown, when a user wishes to extend or retract or ascend or descend the lower drawer type door 30b, the user may input a specific voice within a set distance from the refrigerator 1 to indicate the operation of the lower drawer type door 30b.

The lower drawer type door 30b includes a drawer part 32 onto which a draw-out rail 34 is mounted and in which a container 36 and an ascending and descending mechanism 80 are received. The lower drawer type door 30b includes a door part 32 in which an ascending and descending motor 35 connected to the ascending and descending mechanism 80 is accommodated.

The user's extending manipulation of the lower drawer type door 30b may allow the lower drawer type door 30b to extend forwards. The lower drawer type door 30b may extend along the draw-out rail 33.

In one example, the lower drawer type door 30b may be configured to retract or extend not manually but using a driving force from a retracting or extending motor 15 inside the cabinet 10.

A retracting or extending rack 34 provided on the bottom surface of the lower drawer type door 30b may be engaged with a pinion gear 151 rotated together with driving of the retracting or extending motor 15 provided in the cabinet 10. Therefore, as the retracting or extending motor 15 is driven, the lower drawer type door 30b may be retracted or extended. A minimum extendable distance of the lower drawer type door 30b may be configured such that a front space S1 inside the drawer part 32 accommodating the container 36 is fully exposed to the outside. While the front space S1 inside the drawer part 32 accommodating the container 36 is fully exposed to the outside, in the ascending and descending movements of the ascending and descending mechanism 80 inside the drawer part 32, the container 36 or the food therein may not interfere with the doors 20 and 30a or the cabinet 10 disposed above the container 36.

In this connection, the retracting or extending distance of the lower drawer type door 30b may be determined by a retracting or extending detection sensor disposed on the cabinet 10 and/or the lower drawer type door 30b. The retracting or extending detection sensor may sense that the lower drawer type door 30b is fully extended or closed. One example of the retracting or extending detection sensor may include a pair of magnets 381 and 382 provided on the draw-out rail 33 or the drawer part 32 and a magnetic sensor 16 provided on one side of the cabinet for sensing the magnets 381 and 382.

In another example, the retracting or extending detection sensor may be embodied as a switch positioned in the fully retracted position and the fully extended position of the lower drawer type door 30b, to sense the retracting or extending movement of the lower drawer type door 30b. In another example, the retracting or extending detection sensor may include a sensor that counts the number of rotations of the retracting or extending motor 15 or a sensor that measures the distance between the rear face of the door part 31 and the front face of the cabinet 10, to sense the retract or extend mode of the lower drawer type door 30b.

While it is detected that the lower drawer type door 30b has been fully extended, the ascending and descending motor 35 may be driven to operate the ascending and descending mechanism 80. The ascending and descending mechanism 80 may be configured to operate in a situation in which the lower drawer type door 30b is sufficiently extended to ensure safe ascending and descending of the food or container 36 seated in the ascending and descending mechanism 80.

The extended state of the lower drawer type door 30b will be described in detail. When the lower drawer type door 30b is extended for ascending and descending, the front space S1 should be completely extended to the outside of the lower storage space 12.

In particular, a rear end L1 of the front space S1 should protrude more forwards than the cabinet 10 or a front end L2 of the door 20 as disposed above the front space S1. In order to avoid interference during ascending and descending of the ascending and descending mechanism 80, the rear end L1 of the front space S1 should protrude more forwards than the cabinet 10 or a front end L2 of the door 20 as disposed above the front space S1.

When the drawer part 32 extends for activation of the ascending and descending mechanism 80, the drawer part 32 may not be fully extended and may be extended only to a minimum distance at which interference may be prevented when ascending and descending the ascending and descending mechanism 80, as shown in FIG. 17. In this connection, at least a portion of a rear space S2 of the drawer part 32 is positioned inside the lower storage space 12. That is, at least the rear end L3 of the drawer part 32 should be positioned inside the lower storage space 12.

Accordingly, the lower drawer type door 30b may stably retract or extend and ascend or descend without tilt or breakage of the draw-out rail 33 or the lower drawer type door 30b, which may otherwise occur due to a weight of the food in addition to a weight of the lowered drawer type door 30b including the ascending and descending motor 35 and the ascending and descending mechanism 80 provided inside the door part 31.

The ascending and descending motor 35 may be provided inside the door part 31, and may be coupled to the ascending and descending mechanism 80 to provide power to ascend and descend the ascending and descending mechanism 80. The ascending and descending mechanism 80 may have a scissors deployable structure which may be configured to ascend and descend in accordance with the driving force from the ascending and descending motor 35. In another example, the configuration of the ascending and descending mechanism 80 may be various as long as it ascends and descends via the ascending and descending motor 35.

The ascending and descending motor 35 may start to work only when a full extending of the lower drawer type door 30b has been identified. Only when a set time duration has elapsed since the full extending of the lower drawer type door 30b is identified, the ascending of the ascending and descending mechanism 80 may be initiated via the ascending and descending motor 35, thereby to ensure the user safety and to prevent damage to the stored food.

In another example, when necessary, the user may instruct only the extending operation of the lower drawer type door 30b using a voice of the user. When after the lower drawer type door 30b is extended, the ascending and descending motor 35 will remain stationary. After confirming that the lower drawer type door 30b is fully extended, the user may again instruct the ascending operation of the lower drawer type door 30b using her/his voice.

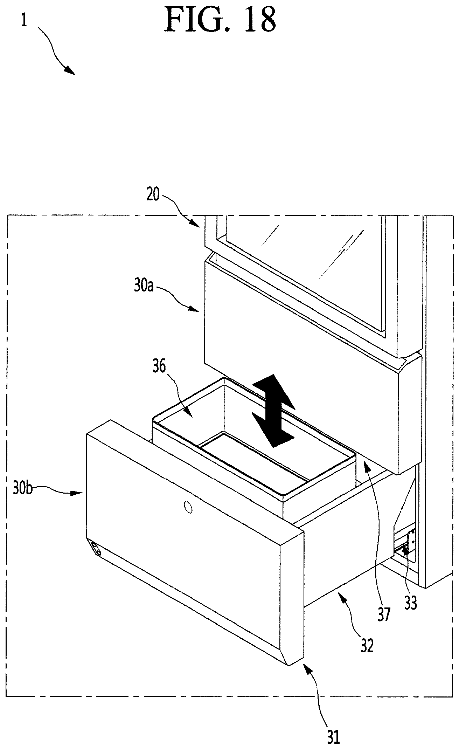

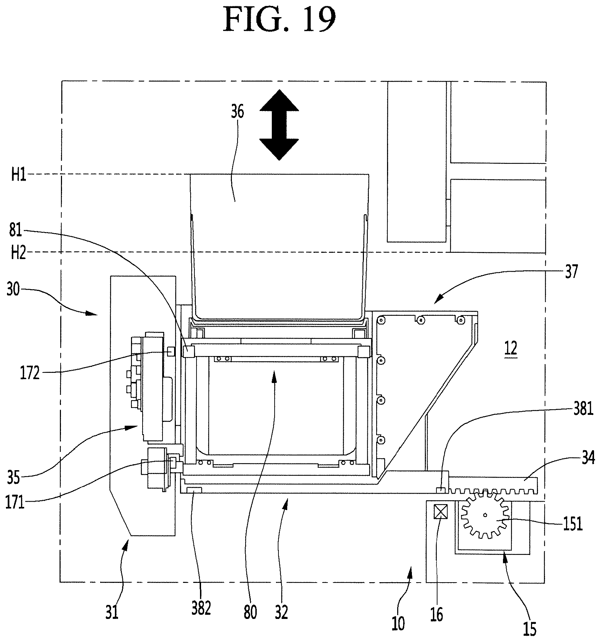

FIG. 18 is a perspective view of a state in which the lower door has been extended and the container has ascended. FIG. 19 shows an interior of the lower door of FIG. 18.

When an activation signal of the ascending and descending motor 35 is inputted while the lower drawer type door 30b has been extended, the ascending and descending motor 35 works. The ascending and descending motor 35 continues to work until the ascending of the ascending and descending mechanism 80 allows the container 36 to reach a state as shown in FIG. 18.

When the ascending and descending motor 35 starts to work, power is transferred to the ascending and descending mechanism 80, such that the ascending and descending mechanism 80 starts to ascend. Thus, the container 36 supported on the ascending and descending mechanism 80 ascends past an open top of the drawer part 32.

The ascending and descending mechanism 80 continues to ascend and stops when the ascending and descending mechanism 80 reaches a sufficient vertical level to facilitate access by the user to the food or container 36 as seated on the ascending and descending mechanism 80 as shown in FIG. 18. In this state, the user can easily lift the food or container 36 without over-bending a waist.

In one example, the ascending and descending detection sensor may sense whether the ascending and descending mechanism 80 has fully ascended or descended. The ascending and descending detection sensor may include a magnet 81 provided on the ascending and descending mechanism 80 and magnetic sensors 171 and 172 for detecting the magnet 81, wherein two first magnetic sensors 171 may be disposed on both sides of the door part at a vertical level corresponding to the maximum descending level of the ascending and descending mechanism 80 while two second magnetic sensors 172 may be disposed on both sides of the door part at a vertical level corresponding to the maximum ascending level of the ascending and descending mechanism 80.

That is, when the magnetic sensors 172 on the door part 31 detects the magnet 81 as shown in FIG. 19, it is determined that the ascending of the ascending and descending mechanism 80 is completed. Thus, a forward rotation of the ascending and descending motor 35 stops.

Further, when the ascending and descending mechanism 80 is descending, the same principle may be applied. That is, when the magnetic sensors 171 on the door part 31 detects the magnet 81, it is determined that the descending of the ascending and descending mechanism 80 is completed. Thus, a reward rotation of the ascending and descending motor 35 stops.

After the user has store food or picked up the food into or from the container, the user inputs a voice for descending of the ascending and descending mechanism 80 and for retracting the lower drawer type door 30b. Thus, first, the ascending and descending motor 35 works, and then the ascending and descending mechanism 80 starts to descend.

The descending of the ascending and descending mechanism 80 may be accomplished by the reverse rotation of the ascending and descending motor 35. The descending of the ascending and descending mechanism 80 may be accomplished slowly in an opposite process to the ascending process as described above.

When the descending of the ascending and descending mechanism 80 is completed, the current state reach a state as shown in FIG. 17. In this connection, the descending completion of the ascending and descending mechanism 80 is detected by the ascending and descending detection sensor. When the magnet 81 is sensed by the magnetic sensor 171 as positioned at a lower level, the controller determines that descending of the ascending and descending mechanism 80 is completed and the ascending and descending motor 35 stops.

After the stopping of the ascending and descending motor 35, the lower drawer type door 30b may be retracted using the retracting and extending motor 15. When the fully retracted state of the lower drawer type door 30b is detected by the retracting and extending detection sensor, the retracting and extending motor 15 stops. When the lower drawer type door 30b is completely closed, the current state may reach a state shown in FIG. 15.

Thus, only with the voice input of the user, the lower door 30 may move consecutively from the extending operation to ascending operation. Again, using the user voice input, the lower drawer type door 30b may continuously move from the descending operation to the retracting operation.

Thus, the user can control the operation of the lower door 30 using the voice even when the user is holding goods by hands or cannot manipulate the manipulation unit 301 or 302 directly. In another example, the manipulation units 301 and 302 may be omitted as needed. This may create a cleaner and more luxurious look of the refrigerator.

The following effects may be expected in the refrigerator and the control method of the refrigerator according to the proposed embodiments of the present invention.

In the refrigerator according to the embodiment of the present disclosure, the user may use the voice input to drive the driving mechanism while holding the object in both hands, such that the lower door may automatically retract or extend and ascend and descend, thereby improving the convenience of the user.

Further, since the lower door and upper door may be opened and closed by the voice of the user, the manipulation structure such as the button exposed to the outside may be omitted. Further, the structure of the handle or the like may be omitted or minimized so that the appearance of the refrigerator may be neat and more luxurious.

Moreover, the microphone module for receiving the voice command is housed inside the cap decoration of the top of the door. The sound input hole may be formed in the top of the cap decoration. This has the advantage that the voice recognition ability can be improved while preventing direct exposure of the microphone module to the user.

In particular, the voice input hole may be defined in the inclined portion of the protruding microphone-module mount, such that it is advantageous that the voice input hole may be defined at a minimum protrusion height. Further, the voice input hole formed in the inclined portion is visually invisible to the user's eyes, so that voice recognition can be effectively performed and at the same time the voice input hole can be prevented from being exposed to the user.

Further, the microphone module may be mounted on the door cover so that the operation noise or shock of the refrigerator is not transmitted directly thereto. The module may hang from the door cover in the top recess. Thus, it is possible to minimize the effect of the noise and vibration transmitted from the refrigerator cabinet on the microphone module. Therefore, it may be expected that voice recognition performance is improved by reducing the noise effect.

Further, the microphone module can be maintained in a steady mounted state due to the stable support of the module by the microphone-module support even when the door is repeatedly opened and closed.

Further, the microphone module is provided with the sealing member sealing between the substrate on which the microphone element is mounted and the bottom face of the door cover, thereby blocking the noise from entering the microphone module. In addition, even when an impact is applied to the door, the sealing member having elasticity may buffer the impact, thereby to protect the microphone module and to allow noise caused by the impact to be reduced. Therefore, there is an advantage in that possibility of false input of the voice is reduced and the voice recognition performance is improved.

Further, the microphone module may be more closely attached to the cover using the microphone-module support. Therefore, this may prevent noise from entering the microphone module. Further, there is an advantage that a rigidly mounted state of the microphone module can be maintained against repetitive shocks caused by the opening and closing of the door.

Further, inside the top recess, the voice recognition module connected to the microphone module are received. Therefore, the door cover is opened and then the microphone module and the speaker module may be separated from the door cover in the event of the maintenance, so that the service and maintenance can be facilitated.

Further, the voice recognition module may communicate with the remote server. Therefore, the voice signal from the microphone module may be transmitted to the server. Then, on the server, the voice signal may be processed and analyzed in a natural language. Then, the processing result may be used to activate the driving mechanism and the operation of the refrigerator.

In other words, when the performance of the server located at a remote site is secured, the voice recognition module is configured merely to be able to communicate with the sever. Thus, the voice recognition module of a minimum size may be placed on the upper door. Therefore, the space loss for the insulation of the upper door may be minimized. When the upper door has a transparent auxiliary door, there is an advantage that a sufficient space for installing the auxiliary door may be ensured.

Further, there is an advantage of being able to reduce the manufacturing cost of the refrigerator by simply configuring the voice recognition module.

In addition, the performance of the server which has relatively less limitations in terms of the space and cost constraints may be secured. This can significantly improve voice processing and recognition performance. Therefore, this can guarantee excellent voice recognition ability. This also has the advantage of ensuring the operation reliability of the refrigerator via the voice command.

The embodiments of the present disclosure as disclosed in the present specification and drawings are merely illustrative of specific examples for purposes of understanding of the present invention, and, thus, are not intended to limit the scope of the present invention as defined by the appended claims.

## Claims

1. A refrigerator (1) comprising:
a cabinet (10) having an upper storage chamber (11) and a lower storage chamber (12) defined therein;
an upper door (20) configured to open and close the upper storage chamber (11);
a lower door (30) positioned below the upper door (20) and retractable into and extendable out of the lower storage chamber (12), the lower door (30) including a drawer part (32) having a storage space defined therein, and a door part (31) configured to open and close the lower storage chamber (12) in an extendable mode and a retractable mode of the lower door (30) respectively; and
a draw-out rail (34) provided between an inner surface of the lower storage chamber (12) and both outer lateral faces of the lower door (30), the draw-out rail (34) being configured to guide a movement of the lower door (30) into and out of the lower storage chamber (12),
an ascending and descending mechanism (80) provided at the drawer part (32) and configured to ascend and descend the storage space;
a driving mechanism provided at the door part (31) and configured to provide a driving force to the ascending and descending mechanism (80);
the refrigerator (1) being **characterized in that** it further comprises a controller (101) provided at the cabinet (10) and configured to control the driving mechanism;
a microphone module (53) provided at the upper door (20) and configured to receive a voice input from a user; and
a voice recognition module (56) configured to allow the controller (101) to control the driving mechanism in response to the voice input from the user,
wherein a cap decoration (50) provided on a top face of the upper door (20) has a top recess (501) defined therein to receive therein the microphone module (53) and the voice recognition module (56).

2. The refrigerator (1) of claim 1, **characterized in that** the voice recognition module (56) includes a communication unit (565) communicating with a remote server (2), wherein the communication unit (565) transmits the use voice signal input to the voice recognition module (56) to the remote server (2) and receives a processing result of the voice signal from the remote server (2).

3. The refrigerator (1) of claim 2, **characterized in that** the controller (101) is configured to control the driving mechanism based on the processing result received from the remote server (2).

4. The refrigerator (1) of claim 2 or 3, **characterized in that** the upper door (20) has a display (24) indicating an operation status of the refrigerator (1), wherein the display (24) is electrically connected to the voice recognition module (56) and displays the processing result received from the remote server (2).

5. The refrigerator (1) of any one of claims 2 to 4, **characterized in that** when the remote server (2) receives a voice signal including a predefined voice or word, communication between the remote server (2) and the voice recognition module (56) is initiated.

6. The refrigerator (1) of any one of claims 1 to 5, **characterized in that** the driving mechanism includes:
a retracting and extending motor (15) disposed at one side of the cabinet (10) for supplying power for retracting or extending the lower door (30) thereto; and
an ascending and descending motor (35) linked to the ascending and descending mechanism (80) for supplying power for ascending and descending the ascending and descending mechanism (80) thereto.

7. The refrigerator (1) of claim 6, **characterized in that** the controller (101) is configured to activate sequentially the retracting and extending motor (15) and the ascending and descending motor (35) in response to the voice input from the user, such that after the lower door (30) has been extended, the ascending and descending mechanism (80) ascends, or such that the ascending and descending mechanism (80) has descended and then the lower door (30) is retracted.

8. The refrigerator (1) of claim 6, **characterized in that** the controller (101) is configured to activate one of the retracting and extending motor (15) and the ascending and descending motor (35) in response to the voice input from the user.

9. The refrigerator (1) of any one of claims 1 to 8, **characterized in that** a cover (51) is disposed to block an open top face of the top recess (501), wherein a microphone-module mount (511) on which the microphone module (53) is mounted is formed on the cover (51), wherein a sound input hole (512) is defined in the microphone-module mount (511).

10. The refrigerator of claim 9, **characterized in that** the microphone-module mount (511) includes:
a protrusion (511a) protruding upwards from the cover (51); and
an inclined portion (511b) extending frontwards from a front face of the protrusion (511a), wherein the inclined portion (511b) has a bottom face inclined downwards in a front direction,
wherein the sound input hole (512) is defined in the inclined portion (511b).

11. The refrigerator (1) of claim 10, **characterized in that** a hole guide (512a) protrudes around the sound input hole (512), wherein a protrusion dimension of the hole guide (512a) decreases in a downward direction, such that a bottom face of the hole guide (512a) has a slope greater than a slope of the bottom face of the inclined portion (511b).

12. The refrigerator (1) of claim 10 or 11, **characterized in that** the microphone module (53) includes:
a microphone substrate (531) extending along and disposed on the inclined portion (511b), wherein a substrate hole (531a) is defined in the microphone substrate (531) at a position corresponding to the sound input hole (512);
a sealing member (533) disposed on a front face of the microphone substrate (531) to seal between the microphone substrate (531) and the inclined portion (511b); and
a microphone element (532) placed on a rear face of the microphone substrate (531) to block the substrate hole (531a),
wherein the sealing member (533) has a through-hole (533a) defined therein in communication with the sound input hole (512) and the substrate hole (531a).

13. The refrigerator (1) of claim 12, **characterized in that** two microphone elements (532) are disposed on both sides of the microphone substrate (531) respectively, wherein the sound input hole (512) includes two sound input holes (512) and the substrate hole (531a) includes two substrate holes (531a), the through-hole (533a) includes two through-holes (533a), wherein the two sound input holes (512), the two substrate holes (531a), and the two through-holes (533a) are aligned linearly with the two microphone elements (532) respectively.

14. The refrigerator (1) of any one of claims 10 to 13, **characterized in that** a microphone-module support (54) supporting the microphone module (53) thereon is mounted on a bottom face of the microphone-module mount (511),
wherein the microphone-module support (54) includes:
a mounting face portion (541) in contact with and coupled to the protrusion (511a); and
a supporting face portion (542) extending from a front end of the mounting face portion (541) in the same inclined degree as the inclined portion (511b),
wherein the microphone module (53) is mounted on the supporting face portion (542).

15. The refrigerator (1) of any one of claims 9 to 14, **characterized in that** the refrigerator (1) further comprises a speaker module (55) received in the top recess (501), wherein the speaker module (55) is connected to the voice recognition module (56),
wherein a speaker-module receiving portion (514) is recessed in the cover (51), wherein the speaker-module (55) is received in the speaker-module receiving portion (514).

## Patentansprüche

1. Kühlschrank (1), der aufweist:
ein Gehäuse (10) mit einer oberen Aufbewahrungskammer (11) und einer darin definierten unteren Aufbewahrungskammer (12);
eine obere Tür (20), die konfiguriert ist, die obere Aufbewahrungskammer (11) zu öffnen und zu schließen;
eine untere Tür (30), die unter der oberen Tür (20) positioniert ist und in die untere Aufbewahrungskammer (12) einziehbar und aus dieser ausfahrbar ist, wobei die untere Tür (30) einen Schubladenteil (32) mit einem darin definierten Aufbewahrungsraum und einen Türteil (31) aufweist, der konfiguriert ist, die untere Aufbewahrungskammer (12) in einem ausfahrbaren Modus bzw. einem einziehbaren Modus der unteren Tür (30) zu öffnen und zu schließen; und
eine Ausziehschiene (34), die zwischen einer Innenfläche der unteren Aufbewahrungskammer (12) und beiden äußeren Seitenflächen der unteren Tür (30) vorgesehen ist, wobei die Ausziehschiene (34) konfiguriert ist, eine Bewegung der unteren Tür (30) in die untere Aufbewahrungskammer (12) hinein und aus dieser heraus zu führen,
einen Aufwärts- und Abwärtsbewegungsmechanismus (80), der am Schubladenteil (32) vorgesehen ist und konfiguriert ist, den Aufbewahrungsraum aufwärts und abwärts zu bewegen;
einen Antriebsmechanismus, der am Türteil (31) vorgesehen und konfiguriert ist, eine Antriebskraft für den Aufwärts- und Abwärtsbewegungsmechanismus (80) bereitzustellen;
wobei der Kühlschrank (1) **dadurch gekennzeichnet ist, dass** er ferner aufweist:
eine Steuerung (101), die am Gehäuse (10) vorgesehen und konfiguriert ist, den Antriebsmechanismus zu steuern;
ein Mikrofonmodul (53), das an der oberen Tür (20) vorgesehen und konfiguriert ist, eine Spracheingabe von einem Benutzer zu empfangen; und
ein Spracherkennungsmodul (56), das konfiguriert ist, es der Steuerung (101) zu ermöglichen, den Antriebsmechanismus als Reaktion auf die Spracheingabe des Benutzers zu steuern,
wobei eine Kappendekoration (50), die auf einer oberen Fläche der oberen Tür (20) vorgesehen ist, eine obere Aussparung (501) aufweist, die darin definiert ist, um darin das Mikrofonmodul (53) und das Spracherkennungsmodul (56) aufzunehmen.

2. Kühlschrank (1) nach Anspruch 1, **dadurch gekennzeichnet, dass** das Spracherkennungsmodul (56) eine Kommunikationseinheit (565) enthält, die mit einem entfernten Server (2) kommuniziert, wobei die Kommunikationseinheit (565) das in das Spracherkennungsmodul (56) eingegebene Nutzungssprachsignal an den entfernten Server (2) überträgt und ein Verarbeitungsergebnis des Sprachsignals vom entfernten Server (2) empfängt.

3. Kühlschrank (1) nach Anspruch 2, **dadurch gekennzeichnet, dass** die Steuerung (101) konfiguriert ist, den Antriebsmechanismus basierend auf dem von dem entfernten Server (2) empfangenen Verarbeitungsergebnis zu steuern.

4. Kühlschrank (1) nach Anspruch 2 oder 3, **dadurch gekennzeichnet, dass** die obere Tür (20) eine Anzeige (24) aufweist, die einen Betriebszustand des Kühlschranks (1) anzeigt, wobei die Anzeige (24) elektrisch mit dem Spracherkennungsmodul (56) verbunden ist und das von dem entfernten Server (2) empfangene Verarbeitungsergebnis anzeigt.

5. Kühlschrank (1) nach einem der Ansprüche 2 bis 4, **dadurch gekennzeichnet, dass**, wenn der entfernte Server (2) ein Sprachsignal empfängt, das eine vordefinierte Stimme oder ein vordefiniertes Wort enthält, eine Kommunikation zwischen dem entfernten Server (2) und dem Spracherkennungsmodul (56) eingeleitet wird.

6. Kühlschrank (1) nach einem der Ansprüche 1 bis 5, **dadurch gekennzeichnet, dass** der Antriebsmechanismus aufweist:
einen Einzieh- und Ausfahrmotor (15), der an einer Seite des Gehäuses (10) angeordnet ist, um Energie zum Einziehen oder Ausfahren der unteren Tür (30) dorthin zu liefern; und
einen Aufwärts- und Abwärtsbewegungsmotor (35), der mit dem Aufwärts- und Abwärtsbewegungsmechanismus (80) verbunden ist, um Energie für die Aufwärts- und Abwärtsbewegung des Aufwärts- und Abwärtsbewegungsmechanismus (80) zu liefern.

7. Kühlschrank (1) nach Anspruch 6, **dadurch gekennzeichnet, dass** die Steuerung (101) konfiguriert ist, nacheinander den Einzieh- und Ausfahrmotor (15) und den Aufwärts- und Abwärtsbewegungsmotor (35) als Reaktion auf die Spracheingabe des Benutzers zu aktivieren, so dass, nachdem die untere Tür (30) ausgefahren wurde, sich der Aufwärts- und Abwärtsbewegungsmechanismus (80) aufwärts bewegt, oder so, dass sich der Aufwärts- und Abwärtsbewegungsmechanismus (80) abwärts bewegt hat und dann die untere Tür (30) eingefahren wird.

8. Kühlschrank (1) nach Anspruch 6, **dadurch gekennzeichnet, dass** die Steuerung (101) konfiguriert ist, als Reaktion auf die Spracheingabe des Benutzers entweder den Einzieh- und Ausfahrmotor (15) oder den Aufwärts- und Abwärtsbewegungsmotor (35) zu aktivieren.

9. Kühlschrank (1) nach einem der Ansprüche 1 bis 8, **dadurch gekennzeichnet, dass** eine Abdeckung (51) so angeordnet ist, dass sie eine offene Oberseite der oberen Aussparung (501) blockiert, wobei eine Mikrofonmodulhalterung (511), an der das Mikrofonmodul (53) angebracht ist, an der Abdeckung (51) ausgebildet ist, wobei ein Schalleingangsloch (512) in der Mikrofonmodulhalterung (511) definiert ist.

10. Kühlschrank nach Anspruch 9, **dadurch gekennzeichnet, dass** die Mikrofonmodulhalterung (511) aufweist:
einen Vorsprung (511a), der von der Abdeckung (51) nach oben vorsteht; und
einen geneigten Abschnitt (511b), der sich von einer Vorderseite des Vorsprungs (511a) nach vorne erstreckt, wobei der geneigte Abschnitt (511b) eine in einer vorderen Richtung nach unten geneigte Bodenfläche aufweist,
wobei das Schalleingangsloch (512) in dem geneigten Abschnitt (511b) definiert ist.

11. Kühlschrank (1) nach Anspruch 10, **dadurch gekennzeichnet, dass** eine Lochführung (512a) um das Schalleingangsloch (512) herum vorsteht, wobei eine Vorsprungsabmessung der Lochführung (512a) in einer Abwärtsrichtung abnimmt, so dass eine Bodenfläche der Lochführung (512a) eine Neigung aufweist, die größer ist als eine Neigung der Bodenfläche des geneigten Abschnitts (511b).

12. Kühlschrank (1) nach Anspruch 10 oder 11, **dadurch gekennzeichnet, dass** das Mikrofonmodul (53) aufweist:
ein Mikrofonsubstrat (531), das sich entlang des geneigten Abschnitts (511b) erstreckt und auf diesem angeordnet ist, wobei ein Substratloch (531a) in dem Mikrofonsubstrat (531) an einer Position definiert ist, die dem Schalleingangsloch (512) entspricht;
ein Dichtungselement (533), das an einer Vorderseite des Mikrofonsubstrats (531) angeordnet ist, um zwischen dem Mikrofonsubstrat (531) und dem geneigten Abschnitt (511b) abzudichten; und
ein Mikrofonelement (532), das auf einer hinteren Fläche des Mikrofonsubstrats (531) angeordnet ist, um das Substratloch (531a) zu blockieren,
wobei das Dichtungselement (533) ein darin definiertes Durchgangsloch (533a) in Verbindung mit dem Schalleingangsloch (512) und dem Substratloch (531a) aufweist.

13. Kühlschrank (1) nach Anspruch 12, **dadurch gekennzeichnet, dass** zwei Mikrofonelemente (532) jeweils auf beiden Seiten des Mikrofonsubstrats (531) angeordnet sind, wobei das Schalleingangsloch (512) zwei Schalleingangslöcher (512) und das Substratloch (531a) zwei Substratlöcher (531a) aufweist, das Durchgangsloch (533a) zwei Durchgangslöcher (533a) aufweist, wobei die beiden Schalleingangslöcher (512), die beiden Substratlöcher (531a) und die beiden Durchgangslöcher (533a) jeweils linear mit den beiden Mikrofonelementen (532) ausgerichtet sind.

14. Kühlschrank (1) nach einem der Ansprüche 10 bis 13, **dadurch gekennzeichnet, dass** ein Mikrofonmodulträger (54), der das Mikrofonmodul (53) trägt, an einer Unterseite der Mikrofonmodulhalterung (511) angebracht ist,
wobei der Mikrofonmodulträger (54) aufweist:
einen Befestigungsflächenabschnitt (541), der in Kontakt mit dem Vorsprung (51 1a) steht und mit diesem gekoppelt ist; und
einen tragenden Flächenabschnitt (542), der sich von einem vorderen Ende des Befestigungsflächenabschnitts (541) in demselben Neigungsgrad wie der geneigte Abschnitt (511b) erstreckt,
wobei das Mikrofonmodul (53) an dem tragenden Flächenabschnitt (542) angebracht ist.

15. Kühlschrank (1) nach einem der Ansprüche 9 bis 14, **dadurch gekennzeichnet, dass** der Kühlschrank (1) ferner ein Lautsprechermodul (55) aufweist, das in der oberen Aussparung (501) aufgenommen ist, wobei das Lautsprechermodul (55) mit dem Spracherkennungsmodul (56) verbunden ist,
wobei ein Lautsprechermodul-Aufnahmeabschnitt (514) in die Abdeckung (51) ausgespart ist, wobei das Lautsprechermodul (55) im Lautsprechermodul-Aufnahmeabschnitt (514) aufgenommen ist.

## Revendications

1. Réfrigérateur (1), comprenant :
une carrosserie (10) comportant un compartiment de stockage supérieur (11) et un compartiment de stockage inférieur (12) ;
une porte supérieure (20) prévue pour ouvrir et fermer le compartiment de stockage supérieur (11) ;
une porte inférieure (30) placée sous la porte supérieure (20) et pouvant être rentrée dans le compartiment de stockage inférieur (12) et sortie de celui-ci, ladite porte inférieure (30) comprenant une partie de tiroir (32) dans laquelle est défini un espace de stockage, et une partie de porte (31) prévue pour ouvrir et fermer le compartiment de stockage inférieur (12) respectivement dans un mode de déploiement et un mode de retrait de la porte inférieure (30) ; et
un rail d'extraction (34) prévu entre une surface intérieure du compartiment de stockage inférieur (12) et les deux faces latérales extérieures de la porte inférieure (30), ledit rail d'extraction (34) étant prévu pour guider le mouvement de la porte inférieure (30) vers l'intérieur et vers l'extérieur du compartiment de stockage inférieur (12),
un mécanisme de montée et de descente (80) disposé dans la partie de tiroir (32) et prévu pour faire monter et descendre l'espace de stockage ;
un mécanisme d'entraînement disposé contre la partie de porte (31) et prévu pour fournir une force d'entraînement au mécanisme de montée et de descente (80) ;
ledit réfrigérateur (1) étant **caractérisé en ce qu'**il comprend en outre
un contrôleur (101) disposé dans la carrosserie (10) et prévu pour commander le mécanisme d'entraînement ;
un module de microphone (53) disposé contre la porte supérieure (20) et prévu pour recevoir une entrée vocale de la part d'un utilisateur ; et
un module de reconnaissance vocale (56) prévu pour permettre au contrôleur (101) de commander le mécanisme d'entraînement en réaction à l'entrée vocale de l'utilisateur,
une décoration de sommet (50) prévue sur une face supérieure de la porte supérieure (20) présentant un renfoncement supérieur (501) défini pour recevoir le module de microphone (53) et le module de reconnaissance vocale (56).

2. Réfrigérateur (1) selon la revendication 1, **caractérisé en ce que** le module de reconnaissance vocale (56) comprend une unité de communication (565) communiquant avec un serveur distant (2), ladite unité de communication (565) transmettant le signal vocal d'utilisation entré dans le module de reconnaissance vocale (56) au serveur distant (2) et recevant un résultat de traitement du signal vocal du serveur distant (2).

3. Réfrigérateur (1) selon la revendication 2, **caractérisé en ce que** le contrôleur (101) est prévu pour commander le mécanisme d'entraînement sur la base du résultat de traitement reçu du serveur distant (2).

4. Réfrigérateur (1) selon la revendication 2 ou la revendication 3, **caractérisé en ce que** la porte supérieure (20) a un afficheur (24) indiquant un état de fonctionnement du réfrigérateur (1), ledit afficheur (24) étant connecté électriquement au module de reconnaissance vocale (56) et affichant le résultat de traitement reçu du serveur à distance (2).

5. Réfrigérateur (1) selon l'une des revendications 2 à 4, **caractérisé en ce que**, lorsque le serveur distant (2) reçoit un signal vocal comprenant une voix ou un mot prédéfinis, la communication entre le serveur distant (2) et le module de reconnaissance vocale (56) est initialisée.

6. Réfrigérateur (1) selon l'une des revendications 1 à 5, **caractérisé en ce que** le mécanisme d'entraînement comprend :
un moteur de déploiement et de retrait (15) disposé sur un côté de la carrosserie (10) pour fournir l'énergie nécessaire au déploiement ou au retrait de la porte inférieure (30) de la carrosserie ; et
un moteur de montée et de descente (35) relié au mécanisme de montée et de descente (80) pour alimenter le mécanisme de montée et de descente (80).

7. Réfrigérateur (1) selon la revendication 6, **caractérisé en ce que** le contrôleur (101) est prévu pour activer séquentiellement le moteur de de déploiement et de retrait (15) et le moteur de montée et de descente (35) en réaction à l'entrée vocale de l'utilisateur, de sorte qu'après déploiement de la porte inférieure (30), le mécanisme de montée et de descente (80) monte, ou de sorte que le mécanisme de montée et de descente (80) descend et que la porte inférieure (30) est ensuite rentrée.

8. Réfrigérateur (1) selon la revendication 6, **caractérisé en ce que** le contrôleur (101) est prévu pour activer le moteur de déploiement et de retrait (15) ou le moteur de montée et de descente (35) en réaction à l'entrée vocale de l'utilisateur.

9. Réfrigérateur (1) selon l'une des revendications 1 à 8, **caractérisé en ce qu'**un couvercle (51) est disposé pour obturer une face supérieure ouverte du renfoncement supérieur (501), une monture (511) de module de microphone sur laquelle le module de microphone (53) est monté étant formée sur le couvercle (51), un trou d'entrée sonore (512) étant défini dans la monture (511) de module de microphone.

10. Réfrigérateur selon la revendication 9, **caractérisé en ce que** la monture (511) de module de microphone comprend :
une saillie (511a) s'étendant vers le haut depuis le couvercle (51) ; et
une partie inclinée (511b) s'étendant vers l'avant depuis une face avant de la saillie (511a), la partie inclinée (511b) ayant une face inférieure inclinée vers le bas dans la direction avant,
le trou d'entrée sonore (512) étant défini dans la partie inclinée (511b).

11. Réfrigérateur (1) selon la revendication 10, **caractérisé en ce qu'**un guide de trou (512a) fait saillie autour du trou d'entrée sonore (512), une dimension de saillie du guide de trou (512a) diminuant vers le bas, de sorte qu'une face inférieure du guide de trou (512a) a une pente plus grande que la face inférieure de la partie inclinée (511b).

12. Réfrigérateur (1) selon la revendication 10 ou la revendication 11, **caractérisé en ce que** le module de microphone (53) comprend :
un substrat de microphone (531) s'étendant le long de la partie inclinée (511b) et disposé sur celle-ci, un trou de substrat (531a) étant défini dans le substrat de microphone (531) à un emplacement correspondant au trou d'entrée sonore (512) ;
un élément d'étanchéité (533) disposé sur une face avant du substrat de microphone (531) pour assurer l'étanchéité entre le substrat de microphone (531) et la partie inclinée (511b) ; et
un élément de microphone (532) placé sur une face arrière du substrat de microphone (531) pour obturer le trou de substrat (531a),
l'élément d'étanchéité (533) présentant un trou traversant (533a) en communication avec le trou d'entrée sonore (512) et le trou de substrat (531a).

13. Réfrigérateur (1) selon la revendication 12, **caractérisé en ce que** deux éléments de microphone (532) sont disposés chacun sur un côté respectif des deux côtés du substrat de microphone (531), le trou d'entrée sonore (512) comprenant deux trous d'entrée sonore (512) et le trou de substrat (531a) comprenant deux trous de substrat (531a), le trou traversant (533a) comprenant deux trous traversants (533a), les deux trous d'entrée sonore (512), les deux trous de substrat (531a) et les deux trous traversants (533a) étant alignés linéairement avec les deux éléments de microphone (532) respectifs.

14. Réfrigérateur (1) selon l'une des revendications 10 à 13, **caractérisé en ce qu'**un support (54) de module de microphone supportant le module de microphone (53) est monté sur une face inférieure de la monture (511) de module de microphone,
ledit support (54) de module de microphone comprenant :
une partie de face de montage (541) en contact et couplée à la saillie (511a) ; et
une partie de face de support (542) s'étendant depuis une extrémité avant de la partie de face de montage (541) suivant le même degré d'inclinaison que la partie inclinée (511b),
le module de microphone (53) étant monté sur la partie de face de support (542).

15. Réfrigérateur (1) selon l'une des revendications 9 à 14, **caractérisé en ce que** ledit réfrigérateur (1) comprend en outre un module de haut-parleur (55) logé dans le renfoncement supérieur (501), ledit module de haut-parleur (55) étant connecté au module de reconnaissance vocale (56),
une partie de logement de module de haut-parleur (514) étant encastrée dans le couvercle (51), le module de haut-parleur (55) étant logé dans la partie de logement de module de haut-parleur (514).
